# EUROPÄISCHE PATENTSCHRIFT

(11) **EP 2 811 880 B1**
(45) Veröffentlichungstag und Bekanntmachung des Hinweises auf die Patenterteilung: **09.01.2019**
(21) Anmeldenummer: 13703797.4
(22) Anmeldetag: 07.02.2013
(51) Int. Cl.: A47J 42/24, A47J 43/10

(54) **PÜRIEREINHEIT FÜR EIN GERÄT ZUM BEARBEITEN VON LEBENSMITTELN**
MASHING UNIT FOR A FOOD PROCESSOR
UNITÉ DE BROYAGE POUR UN APPAREIL DE PRÉPARATION D'ALIMENTS

(30) Priorität: 09.02.2012 CH 178122012
(43) Veröffentlichungstag der Anmeldung: 17.12.2014
(73) Patentinhaber: Groupe SEB Schweiz GmbH, 8152 Glattpark (Opfikon) (CH)
(72) Erfinder: HERREN, Bruno, CH-6375 Beckenried (CH)
(74) Vertreter: Rentsch Partner AG
(86) Internationale Anmeldenummer: PCT/EP2013/052487
(87) Internationale Veröffentlichungsnummer: WO 2013/117675

(56) Entgegenhaltungen:
- WO-A1-2007/128154
- WO-A2-2010/150263
- US-A1- 2008 301 952
- US-A1- 2011 226 140

## Beschreibung

### TECHNISCHES GEBIET

Die Erfindung bezieht sich auf eine Püriereinheit für ein Gerät zum Bearbeiten von Lebensmitteln und ein Gerät mit einer solchen Püriereinheit.

### STAND DER TECHNIK

Aus dem Stand der Technik sind handbetriebene Geräte bekannt, welche zum Zerkleinern von Lebensmitteln auf einer Arbeitswelle angeordnete Messer aufweisen. Die Arbeitswelle mit den Messer befindet sich in einem Lebensmittelbehälter des handbetriebenen Geräts und wird beispielsweise durch eine Antriebsvorrichtung mit einem Schnurzug in Rotation versetzt. So können verschiedenste Lebensmittel wie z.B. Zwiebeln, Karotten, etc. effizient und mit einem kleinen Aufwand zerkleinert oder gehackt werden. Zur Herstellung eines Pürees oder eines Breis sind solche Geräte weniger geeignet. Im Stand der Technik wird ein Püree oder ein Brei mit einem Passiergerät hergestellt, wie z.B. einem Passe-vite (auch als Flotte Lotte, Passiermühle oder Gemüsemühle bekannt) oder einem Fleischwolf mit eingesetzten Lochscheiben. Allerdings erfordert dies einen zusätzlichen Aufwand an Geräten, welche beschafft und unterhalten werden müssen.

Die US 2008/0301952 A1 offenbart eine Schneideinheit zur Verwendung in einem schnurzugsbetriebenen Küchengerät. Die Schneideinheit weist zwei Klingen auf, die drehbar um eine Achse gelagert sind. Die Klingen sind schwenkbar zueinander angeordnet und werden durch den Schnurzugsantrieb in eine rotierende Bewegung versetzt. Auf diese Weise wird das Einsatzgut zerkleinert. Neben der Schneideinheit ist auch eine Schäleinheit vorgesehen.

Die US201 1/0226140 A1 bezieht sich auf eine Arbeitseinheit oder ein Gerät, das eine solche Arbeitseinheit zur Verarbeitung von Lebensmitteln enthält. Die Arbeitseinheit kann mit Hilfe einer manuellen Antriebseinheit in eine Rotation versetzt werden. Die Arbeitseinheit hat vorzugsweise mindestens zwei Arbeitsmittel (z.B. Schneidklingen), die an der Arbeitsachse angeordnet sind und in Umfangsrichtung dieser wirken. Mindestens eines der Arbeitsmittel kann um die Arbeitsachse in Bezug auf mindestens ein weiteres Arbeitsmittel innerhalb eines begrenzten Schwenkwinkels bewegt werden.

Die WO 2007/128154 A1 offenbart ein Gerät zum Bearbeiten von Lebensmitteln mit einem Oberteil , einem Antriebsmechanismus und einem Unterteil mit Arbeitsbehälter. Der Antriebsmechanismus manuell, beispielsweise ein Schnurzugsantrieb und dazu eingerichtet eine Arbeitseinheit in Drehbewegung zu versetzen. Der Antriebsmechanismus weist eine primäre und eine sekundäre Antriebseinheit auf, die über ein Getriebe derart in Wirkverbindung stehen, dass ein Übersetzungsverhältnis von 1:1.5 bis 1:4, vorzugsweise zwischen 1:1.8 bis 1:1.9 erreicht wird.

WO2010/150263 offenbart eine Schneideinheit zum Bearbeiten von Lebensmitteln. Diese Schneideinheit umfasst eine Welle, die mit einem Motor angetrieben wird und Schneidklingen die auf dieser Welle angeordnet sind. Neben den Schneidklingen weist die Einheit auch Schaufeln auf.

### DARSTELLUNG DER ERFINDUNG

Eine Aufgabe der Erfindung besteht darin, einen Püriereinheit für ein Gerät zum Bearbeiten von Lebensmitteln vorzuschlagen, welche mindestens gewisse Nachteile des Standes der Technik nicht aufweist. Insbesondere soll die Püriereinheit zur Verwendung in einem bekannten Gerät zum Bearbeiten von Lebensmitteln verwendet werden können, um ein Püree oder einen Brei herzustellen.

Diese Aufgabe wird durch die im unabhängigen Patentanspruch 1 definierten Merkmale gelöst. Eine Püriereinheit für ein Gerät zum Bearbeiten von Lebensmitteln hat mindestens ein zu einer Rotationsachse radial angeordnetes Messer und mindestens einen zur Rotationsachse radial angeordneten Flügel, wobei das mindestens eine Messer und der mindestens eine Flügel um die Rotationsachse rotierbar sind. Wird diese Püriereinheit in einem Lebensmittelbehälter mit darin angeordneten Lebensmitteln in Rotation versetzt, dann erfolgt ein Pürieren der Lebensmittel, welche von den Messer zerschnitten werden und auf den Flügel aufschlagen, wodurch eine weitere Bearbeitung erfolgt.

In einer erfindungsgemäßen Ausführungsvariante sind ein Messer und ein Flügel Bestandteile eines Püriersegments und in axialer Richtung der Rotationsachse derart zueinander angeordnet, dass beim Gebrauch der Püriereinheit in einem Gerät zum Bearbeiten von Lebensmitteln ein Pürieren von Lebensmitteln bewirkt wird. Beim Gebrauch des Geräts zum Bearbeiten von Lebensmitteln mit darin angeordneter Püriereinheit können sich die Messer und die Flügel in einem vergleichbaren Abstand zum Boden eines Lebensmittelbehälters befinden. Somit werden die Lebensmittel im Bereich der Messer und Flügel zunächst zerschnitten und schlagen dann auf den Flügel auf, wodurch eine weitere Bearbeitung der Lebensmittel erfolgt. Durch die Wirkung der Messer und Flügel erfolgt eine Pürierung der Lebensmittel.

In einer anderen Ausführungsvariante sind ein Messer und ein Flügel Bestandteile eines Püriersegments sind und gegeneinander um die Rotationsachse bis zu einem maximalen Schwenkwinkel verschwenkbar sind oder in einem festen Schwenkwinkel zueinander stehen. Bei verschwenkbaren Messer und Flügel lässt sich die Püriereinheit für die Aufbewahrung oder Lagerung besonders kompakt anordnen. Die verschwenkbaren Messer und Flügel können zudem den Anlauf beim Pürieren positiv beeinflussen, da zunächst nur die Messer und erst nach beispielsweise einer halben Umdrehung die Flügel mit den Lebensmittel zusammenwirken. Die Anordnung in einem festen Schwenkwinkel, also die starre Anordnung der Messer und Flügel kann zu einer Kosteneinsparung bei der Herstellung und einer erhöhten Langlebigkeit der Püriereinheit führen.

Die Messer und/oder Flügel können also gemäss bevorzugter Ausführungsformen der Erfindung fest oder verschwenkbar an der Rotationsachse angeordnet sein. Dies gilt auch für solche Ausführungsformen, bei denen eine Mehrzahl von Messern und Flügeln einzeln und nicht in Püriersegmenten an der Rotationsachse angeordnet sind, oder Ausführungsformen bei denen eine Mehrzahl von Messern und Flügeln in mindestens einem Püriersegment vorgesehen sind. Gemäss der vorliegenden Erfindung können also alle Messer und Flügel in radialer Position fest oder verschwenkbar an der Rotationsachse angeordnet sein, oder nur eines oder mehrere der vorgenannten Bearbeitungsmittel können fest an der Rotationsachse angeordnet sein, während die übrigen Messer und/oder Flügel verschwenkbar angeordnet sind.

In einer Ausführungsvariante beträgt der maximale Schwenkwinkel respektive der feste Schwenkwinkel 180°. Die Messer und Flügel sind dann im Wesentlichen diametral angeordnet. Bei Versuchen hat es sich gezeigt, dass die diametrale Anordnung der Messer und Flügel zu einem effizienten Pürieren von Lebensmittel führt.

In einer Ausführungsvariante sind ein erstes Messer sowie ein erster Flügel Bestandteile eines ersten Püriersegments und ein zweites Messer sowie ein zweiter Flügel Bestandteile eines zweiten Püriersegments. Das erste Püriersegment und das zweite Püriersegment sind bis zu einem maximalen Segmentwinkel gegeneinander verschwenkbar oder in einem festen Segmentwinkel zueinander stehen. Das Verschwenken der Püriersegmente kann das Anlaufverhalten positiv beeinflussen, da die Püriersegmente nacheinander zum Einsatz kommen. Falls die Püriersegmente in einem festen Segmentwinkel zueinander stehen, d.h. starr angeordnet sind, dann kann dies zu einer Kosteneinsparung bei der Herstellung oder einer Verbesserung der Langlebigkeit der Püriereinheit führen.

In einer Ausführungsvariante beträgt der maximale Segmentwinkel respektive der feste Segmentwinkel 90°. Bei Versuchen hat es sich gezeigt, dass ein Winkel von 90° zu einem effizienten Pürieren von Lebensmittel führt.

In einer erfindungsgemäßen Ausführungsvariante weist ein Flügel Lochungen auf, um beim Gebrauch der Püriereinheit ein Pürieren von Lebensmitteln zu bewirken. Die Lebensmittel werden beim Gebrauch der Püriereinheit durch die Lochungen hindurchgedrückt, was zu einem effizienten Pürieren führt.

Gemäss bevorzugter Ausführungsformen sind die Kanten der Löcher im Flügel mit einem kleinen Radius, respektive scharfkantig ausgebildet um die Pürierwirkung zu verbessern. Es soll hier betont werden, dass die Pürierflügel stabil genug, vorzugsweise aus Metallblech, ausgebildet sind um die in groben Stücken vorliegenden zu pürierenden Lebensmittel effizient zu pürieren. Diese werden je nach Anzahl und Geschwindigkeit der Umdrehungen der Pürierflügel mehr oder weniger stark zerkleinert und dabei auch vermischt.

In einer weiteren Ausführungsvariante weisen ein erster Flügel und ein zweiter Flügel gleiche oder unterschiedliche Lochungen auf. So kann der Flügel welcher sich näher beim Boden des Lebensmittelbehälters des Geräts zum Bearbeiten von Lebensmitteln befindet kleinere Lochungen aufweisen als der Flügel, welcher vom Boden weiter entfernt ist. Das schon fast flüssige Püree oder Brei sammelt sich bevorzugt im Bereich des Bodens und wird aufgrund der kleineren Lochungen des Flügels noch weiter püriert. Bei Versuchen hat es sich gezeigt, dass gleiche Lochung der beiden Flügel zu einem effizienten Pürieren von Lebensmitteln führt. Gleiche Lochungen der Flügel vereinfachen den Herstellungsprozess der Püriereinheit und können somit Kosten sparen.

In einer anderen Ausführungsvariante weist ein Flügel eine Abstreifeinrichtung auf. Die Abstreifeinrichtung kann eingerichtet sein, um teilweise pürierte Lebensmittel von der Innenwand des Lebensmittelbehälters abzustreifen und in den Wirkbereich der Messer und Flügel zu transportieren, damit eine vollständige Pürierung erfolgt.

In einer weiteren Ausführungsvariante weist ein erster Flügel eine erste Abstreifeinrichtung und ein zweiter Flügel ein zweite Abstreifeinrichtung auf, wobei die erste Abstreifeinrichtung und die zweite Abstreifeinrichtung gleiche oder unterschiedliche Dimensionen aufweisen. Die Abstreifeinrichtung des dem Boden zugewandten Flügels kann kürzer ausgeführt sein, da dieser Flügel nahe über dem Boden angeordnet ist. Die Abstreifeinrichtung welche vom Boden weiter entfernt ist kann länger ausgeführt sein, da zwischen diesem Flügel und dem oberen Rand des Lebensmittelbehälters ein grösserer Abstand besteht. Durch die unterschiedlichen Dimensionen der Abstreifeinrichtungen kann ein grösserer Bereich des Innenbereichs des Lebensmittelbehälters von teilweise pürierten Lebensmitteln befreit werden und für eine weitere Bearbeitung in den Bereich der Messer und Flügel transportiert werden.

In einer Ausführungsvariante ist eine Abweisereinrichtung radial zur Rotationsachse angeordnet ist, welche um die Rotationsachse rotierbar ist und eingerichtet ist, um Lebensmittel und Schneidgut in den Bereich der Messer und Flügel zu transportieren. Die Abweisereinrichtung kann in der Nähe des Deckels des Geräts zum Bearbeiten von Lebensmitteln angeordnet sein, so dass teilweise pürierte Lebensmittel vom Deckel zurück in den Bereich der Messer und Flügel transportiert und weiter bearbeitet werden können.

In einer Ausführungsvariante ist an einem Ende der Püriereinheit eine Aufnahmeöffnung vorgesehen für das Zusammenwirken mit einem Lagerzapfen eines Lebensmittelbehälters des Geräts zum Bearbeiten vom Lebensmitteln. Die Püriereinheit kann damit im Lebensmittelbehälter stabil gelagert werden, was die Effizienz beim Pürieren verbessern kann.

In einer anderen Ausführungsvariante ist an einem Ende der Püriereinheit ein Antriebsnocken vorgesehen für das Zusammenwirken mit einer Antriebsvorrichtung des Geräts zum Bearbeiten von Lebensmitteln. Die Püriereinheit kann dadurch sowohl in Rotation versetzt werden als auch stabil gelagert werden, was die Effizienz beim Pürieren verbessern kann.

Im erfindungsgemässen Gerät zum Bearbeiten von Lebensmitteln, sind Lebensmittelbehälter und Flügel der Püriereinheit gemäss bevorzugter Ausführungsformen derart aufeinander Abgestimmt, dass die Flügel während der Rotationsbewegung annähernd das gesamte Innenvolumen des Lebensmittelbehälters erreichen. Das nicht bearbeitbare Totvolumen im Bereich von Boden, Deckel und Behälterinnenwand ist entweder durch die bereits vorgängig beschriebenen Abstreifeinrichtungen und/oder Abweisereinrichtungen minmiert oder bei Ausführungsformen ohne Abstreifeinrichtungen und/oder Abweisereinrichtungen bevorzugt auf eine Querschnittsfläche von unter 10% vorzugsweise von unter 5 % reduziert.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch einen Schnitt durch eine Püriereinheit;
- Fig. 2: schematisch eine Aufsicht einer Püriereinheit; und
- Fig. 3: ein Gerät zum Bearbeiten von Lebensmitteln mit einer darin angeordneten Püriereinheit.

### WEG(E) ZUR AUSFÜHRUNG DER ERFINDUNG

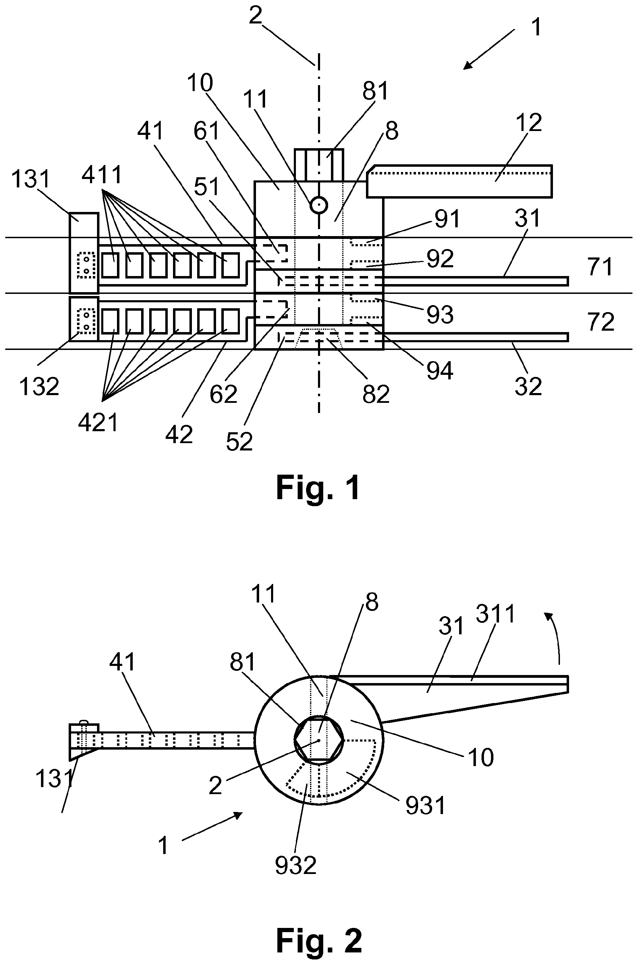

Figur 1 zeigt schematisch einen Schnitt durch eine erfindungsgemässe Püriereinheit 1, welche eine Rotationsachse 2 aufweist. Radial zur Rotationsachse 2 sind ein erstes Messer 31 und ein zweites Messer 32 angeordnet. Ebenfalls radial zur Rotationsachse 2 sind ein erster Flügel 41 und ein zweiter Flügel 42 angeordnet. Das erste Messer 31, das zweite Messer 32, der erste Flügel 41 und der zweite Flügel 42 sind um die Rotationsachse 2 rotierbar.

Das erste Messer 31 kann an einem ersten Messerhalter 51 und das zweite Messer 32 an einem zweiten Messerhalter 52 angeordnet sein. Der erste Flügel 41 kann an einem ersten Flügelhalter 61 und der zweite Flügel 42 kann an einem zweiten Flügelhalter 62 angeordnet sein. Der erste Messerhalter 31, der zweiter Messerhalter 32, der erste Flügelhalter 61 und der zweite Flügelhalter 62 können im Wesentlichen je als zylindrische Körper ausgeführt sein, wobei die Achsen dieser zylindrischen Körper mit der Rotationsachse 2 zusammenfallen.

Wie in Figur 1 dargestellt, ist von oben nach unten in axialer Richtung zunächst der erste Flügelhalter 61, dann der erste Messerhalter 51, dann der zweite Flügelhalter 62 und schliesslich der zweite Messerhalter 52 angeordnet. Der erste Messerhalter 51 und der erste Flügelhalter 61 sind zusammen mit dem ersten Messer 31 und dem ersten Flügel 42 Bestandteile des ersten Püriersegments 71. Entsprechend sind der zweite Messerhalter 52 und der zweite Flügelhalter 62 zusammen mit dem zweiten Messer 32 und dem zweiten Flügel 42 Bestandteile des zweiten Püriersegments 72.

Die Püriereinheit 1 ist vorgesehen, um in einem Gerät zum Bearbeiten von Lebensmitteln angeordnet zu werden, welches einen Lebensmittelbehälter aufweist, der mit einem Deckel verschlossen werden kann. Die Püriereinheit 1 wird beim Gebrauch im Lebensmittelbehälter angeordnet, wobei sich beispielsweise das erste Püriersegment 71 näher beim Deckel und das zweite Püriersegment 72 näher beim Boden des Lebensmittelbehälters befinden.

Die Püriereinheit 1 kann eine Arbeitswelle 8 aufweisen, welche beispielsweise am zweiten Messerhalter 52 angeformt ist. Nacheinander können der zweite Flügelhalter 62, der erste Messerhalter 51 und der erste Flügelhalter 61 auf der Arbeitswelle 8 aufgesetzt sein. Anschliessend an den ersten Flügelhalter 61 kann ein Abschlusshalter 10 vorgesehen sein, welcher beispielsweise mit einem Splint 11 an der Arbeitswelle 8 befestigt ist. Es können Anschlagsvorrichtungen 91, 92, 93, 94 vorgesehen sein, welche in bekannter Weise Nuten und Nocken umfassen, um in einem Winkelbereich ein gegenseitiges Verschwenken der Messerhalter 51, 52, der Flügelhalter 61, 62 sowie des Abschlusshalters 10 zu ermöglichen oder eine starre gegenseitige Ausrichtung zu erstellen. Am gemäss Figur 1 oberen Ende der Arbeitswelle 8 kann ein Antriebsnocken 82 vorgesehen sein für das Zusammenwirken mit einer Antriebsvorrichtung eines Geräts zum Bearbeiten von Lebensmitteln. Am unteren Ende des zweiten Messerhalters 52 kann eine Aufnahmeöffnung 82 vorgesehen sein für das Zusammenwirken mit einem Lagerzapfen eines Behälters des Geräts zum Bearbeiten von Lebensmitteln.

Die Arbeitswelle 8 kann auch aus einem einzelnen Werkstück hergestellt sein, wobei die Messerhalter 51, 52, die Flügelhalter 61, 62 und der Abschlusshalter 10 auf der Arbeitswelle 8 aufgesetzt sind. In diesem Fall kann auch die Aufnahmeöffnung 82 an einem Ende der Arbeitswelle 8 vorgesehen sein.

Das erste Messer 31 und der erste Flügel 41 des ersten Püriersegments 71 können in axialer Richtung derart zueinander angeordnet sein, dass beim Gebrauch der Püriereinheit 1 im Gerät zum Bearbeiten von Lebensmitteln ein Pürieren von Lebensmittel bewirkt wird. So können das erste Messer 31 und der erste Flügel 41 insbesondere derart angeordnet sein, dass eine zur Rotationsachse 2 senkrechte Ebene sowohl Teile des ersten Messers 31 als auch des ersten Flügels 41 umfasst. Mit anderen Worten befinden sich beim Gebrauch der Püriereinheit 1 das Messer 31 und der Flügel 41 in vergleichbarer Höhe über dem Boden des Lebensmittelbehälters. Entsprechendes gilt für das zweite Messer 32 und den zweiten Flügel 42. Beim Gebrauch der Püriereinheit wird diese in Rotation versetzt, wobei die im Lebensmittelbehälter angeordneten Lebensmittel durch die Messer 31, 32 zerschnitten und durch die Flügel 41, 42 weiter bearbeitet werden. Die Messer 31, 32 weisen zum Zerschneiden der Lebensmittel in Rotationsrichtung Schneidkanten auf, mit welchen die Lebensmittel zerschnitten werden. Die Flügel 41, 42 weisen zum Bearbeiten der Lebensmittel in Rotationsrichtung Flächen auf, auf welchen die Lebensmittel aufschlagen. Bei der Rotation der Püriereinheit 1 werden die Lebensmittel durch die Messer 31, 32 und die Flügel 41, 42 püriert.

Wie erwähnt können die Messer 31, 32 und die Flügel 41, 42 gegeneinander um die Rotationsachse 2 verschwenkbar sein oder in einem festen Schwenkwinkel zueinander stehen, d.h. starr angeordnet sein. Verschwenkbare Messer 31, 32, und Flügel 41, 42 haben beispielsweise den Vorteil, dass beim Nichtgebrauch der Püriereinheit 1 diese für die Lagerung wenig Platz braucht, da die Messer 31, 32 und Flügel 41, 42 beispielsweise im Wesentlichen in eine Ebene welche die Rotationsachse 2 enthält verschwenkt werden können. Zudem kann eine solche Püriereinheit 1 den Vorteil haben, dass nach dem Einsetzen der Püriereinheit in den Lebensmittelbehälter des Geräts zum Bearbeiten von Lebensmitteln die Messer 31, 32, und die Flügel 41, 42 zunächst im Wesentlichen in einer Ebene liegen, welche die die Rotationsachse 2 enthält. Beim Rotieren der Püriereinheit 1 verschwenken die Messer 31, 32 und Flügel 41, 42 nacheinander in die entsprechenden Positionen, wodurch der Anlauf der Püriereinheit 1 erleichtert wird, da der Widerstand der Messer 31, 32 und Flügel 41, 42, welche durch die Lebensmittel hindurchbewegt werden, nur schrittweise aufgebaut wird. Praktische Versuche haben gezeigt, dass dieser Vorteil nicht von grosser Bedeutung ist und eine Püriereinheit 1 mit starr angeordneten Messer 31, 32 und Flügel 41, 42 praktisch genauso gut funktioniert wie eine Püriereinheit 1 mit verschwenkbaren Messer 31, 32 und Flügel 41, 42.

Allgemein kann gesagt werden, dass die Flügel 41, 42 Lochungen 411, 421 aufweisen, welche auf verschiedenen Flügel 41, 42 gleich oder unterschiedlich ausgeführt sein können aufweisen können. Die Lochungen können gemäss der Erfindung rechteckig, länglich, oval, kreisrund oder in irgendeiner Weise ausgeführt sein. Die Grösse der Lochungen kann so gewählt sein, dass das Verhältnis zwischen Flügelbereichen welche eine Lochung aufweisen und Flügelbereichen welche aus einem Material bestehen grösser ist als 1, d.h. dass mehr Leerfläche als Materialfläche besteht. Das Verhältnis zwischen Lochbereich und Materialbereich kann auch ungefähr 1 betragen, d.h. dass ungefähr gleich viel Leerfläche wie Materialfläche besteht. Schliesslich kann das Verhältnis zwischen Lochbereich und Materialbereich auch kleiner als 1 sein. d.h. dass weniger Lochbereich als Materialbereich besteht. Die Anzahl der Lochungen kann relativ klein gewählt sein und beispielsweise zwischen 4 und 10 betragen. In diesem Fall weisen die Flügel relativ grosse Lochungen auf. Die Anzahl der Lochungen kann bei gleichem Verhältnis zwischen Lochbereich und Materialbereich auch relativ gross gewählt sein und beispielsweise zwischen 100 und 500 betragen. In diesem Fall weisen die Flügel relativ kleine Lochungen auf. Experimente haben gezeigt, dass ungefähr 4 bis 6 ovale Lochungen oder Langlöcher eine gute Pürierleistung ergeben.

Figur 2 zeigt schematisch eine Aufsicht auf die Püriereinheit 1. Ersichtlich sind das erste Messer 31 und der erste Flügel 41, welche radial zur Rotationsachse 2 angeordnet sind. In Rotationsrichtung, welche in Figur 2 mit einem Pfeil schematisch dargestellt ist, befindet sich am ersten Messer 31 eine Schneidkante 311. Das zweite Messer 32 ist entsprechend aufgebaut und weist insbesondere ebenfalls eine Schneidkante auf (in Figur 2 nicht ersichtlich).

In Figur 2 ist schematisch die Arbeitswelle 8 mit dem Antriebsnocken 82 dargestellt. Die Achse der Arbeitswelle 8 fällt mit der Rotationsachse 2 zusammen. Ferner ist in Figur 2 eine Nut 931 dargestellt, welche zum Zusammenwirken mit einem Nocken 932 eingerichtet ist. Die Nut 931 kann beispielsweise am zweiten Flügelhalter 62 und der Nocken 932 am ersten Messerhalter 51 angebracht sein. Die Nut 931 und der Nocken 932 können eine Anschlagvorrichtung 93 bilden, welche zwischen dem ersten Messerhalter 51 und dem zweiten Flügelhalter 62 vorgesehen ist. Zwischen den verbleibenden Messerhalter, Flügelhalter und dem Abschlusshalter können in analoger Weise weitere Anschlagvorrichtungen 91, 92, 94 vorgesehen sein. Die Anschlagvorrichtung 93 gemäss Figur 2 kann eingerichtet sein, um eine Verschwenkung von 90° zu ermöglichen, welche insbesondere dem Segmentwinkel zwischen dem ersten Püriersegment 71 und dem zweiten Püriersegment 72 entsprechen kann.

Die Anschlagvorrichtungen 92, 94 zwischen den Messerhalter 51, 52 und den Flügelhalter 61, 62 können derart eingerichtet sein, dass sich die Flügel an die der Schneidkante 311 abgewandten Seite der Messer 31, 32 verschwenken lassen. Für die Lagerung der Püriereinheit 1 kann diese somit sehr kompakt sein. Dies Anschlagvorrichtungen 92, 94 können ferner eingerichtet sein, dass nach einer Verschwenkung der Flügelhalter 61, 62 um 180° diese den Messer 31, 32 wie in Figur 2 dargestellt im Wesentlichen diametral gegenüberstehen. Beim Gebrauch der Püriereinheit 1 werden somit die Lebensmittel durch die Messer 31, 32 zerschnitten und durch die Flügel 41, 42 weiter bearbeitet, wobei eine Pürierung der Lebensmittel erfolgt.

Am Abschlusshalter 10 kann wie in Figur 1 dargestellt ein Abweisereinrichtung 12 vorgesehen sein, welcher beim Gebrauch der Püriereinheit 1 und des Geräts zum Bearbeiten von Lebensmitteln bewirkt, dass Lebensmittel oder Schneidgut, welche sich beim Gebrauch am Deckel des Geräts zum Bearbeiten von Lebensmittel ansammeln können, fortwährend in den Bereich mit den Messer 31, 32 und den Flügel 41, 42 transportiert werden.

Wie in Figur 1 und Figur 2 skizziert, können an den Enden der Flügel 41, 42 Abstreifeinrichtung 131, 132 vorgesehen sein. Diese können aus einem gummiartigen Material hergestellt sein und eine sehr dünne, auslaufende, weiche, flexible Lippe aufweisen, so dass das Festkleben vermieden wird von Lebensmittel oder Schneidgut an der Innenseite des Behälters des Geräts zum Bearbeiten von Lebensmitteln. Die Abstreifeinrichtungen 131, 132 können beispielsweise zusammen mit einer Halteplatte warm vernietet an den Flügel 41, 42 angebracht sein.

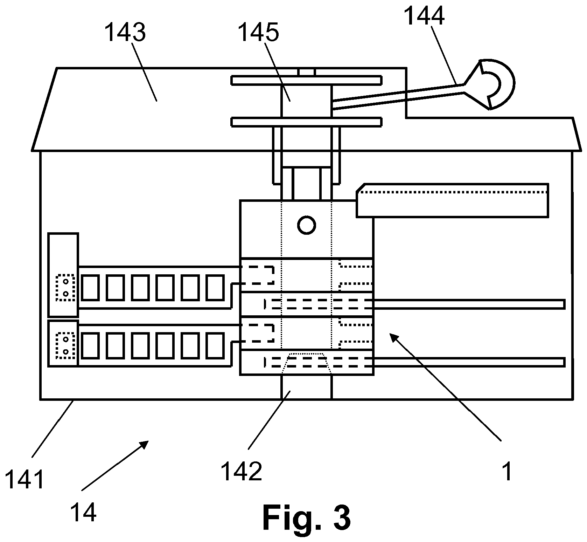

Figur 3 zeigt schematisch ein Gerät 14 zum Bearbeiten von Lebensmitteln. Das Bearbeitungsgerät 14 umfasst einen Lebensmittelbehälter 141, welcher einen Lagerzapfen 142 aufweist. Die Püriereinheit 1 ist im Lagerzapfen 142 gelagert. Das Gerät 14 ist mit einem Deckel 143 verschlossen. Am Deckel 143 ist ein Schnurzug 143 angebracht, welcher mit einer Antriebsvorrichtung 145 zusammenwirkt, um die Püriereinheit 1 in Rotation zu versetzen.

### BEZUGSZEICHEN

- 1: Püriereinheit
- 2: Rotationsachse
- 31, 31: Messer
- 41, 42: Flügel
- 411, 421: Lochungen
- 51, 52: Messerhalter
- 61, 62: Flügelhalter
- 71, 72: Püriersegmente
- 8: Antriebswelle
- 81: Antriebsnocken
- 82: Aufnahmeöffnung
- 91, 92, 93, 94: Anschlagvorrichtungen
- 931: Nocken
- 932: Nut
- 10: Abschlusshalter
- 11: Split
- 12: Abweisereinrichtung
- 131, 132: Abstreifeinrichtungen
- 14: Gerät zum Bearbeiten von Lebensmitteln
- 141: Lebensmittelbehälter
- 142: Lagerzapfen
- 143: Deckel
- 144: Schnurzug
- 145: Antriebsvorrichtung

## Patentansprüche

1. Püriereinheit (1) für ein Gerät zum Bearbeiten von Lebensmitteln, mit mindestens einem zu einer Rotationsachse (2) radial angeordneten Messer (31, 32) und mindestens einem zur Rotationsachse (2) radial angeordneten Flügel (41, 42), wobei das mindestens eine Messer (31, 32) und der mindestens eine Flügel (41, 42) um die Rotationsachse (2) rotierbar sind, wobei mindestens ein Messer (31, 32) und mindestens ein Flügel (41, 42) Bestandteile eines Püriersegments (71, 72) sind, in axialer Richtung der Rotationsachse (2) zueinander angeordnet sind, **dadurch gekennzeichnet, dass** der Flügel (41, 42) Lochungen (411, 421) aufweist und das Püriersegment dazu eingerichtet ist, beim Gebrauch der Püriereinheit (1) in einem Gerät zum Bearbeiten von Lebensmitteln ein Pürieren von Lebensmitteln zu bewirken.

2. Püriereinheit (1) nach Anspruch 1, wobei ein Messer (31, 32) und ein Flügel (41, 42) Bestandteile eines Püriersegments (71, 72) sind und gegeneinander um die Rotationsachse (2) bis zu einem maximalen Schwenkwinkel verschwenkbar sind oder in einem festen Schwenkwinkel zueinander stehen.

3. Püriereinheit (1) nach einem der Ansprüche 1 bis 2, wobei alle Messer und Flügel fest an der Rotationsachse angeordnet sind, oder mindestens ein Messer (31, 32) und/oder mindestens ein Flügel (41, 42) relativ um einen begrenzten Schwenkwinkel um die Rotationsachse (2) verschwenkbar sind, wobei alle Messer und Flügel in einem festen Schwenkwinkel zueinander stehen oder mindestens ein Messer und mindestens ein Flügel relativ um einen begrenzten Schwenkwinkel zueinander verschwenkbar sind.

4. Püriereinheit (1) nach Anspruch 2 oder 3, wobei der maximale Schwenkwinkel respektive der feste Schwenkwinkel 180° beträgt.

5. Püriereinheit (1) nach einem der Ansprüche 1 bis 4, wobei ein erstes Messer (41) sowie ein erster Flügel (51) Bestandteile eines ersten Püriersegments (71) sind und ein zweites Messer (42) sowie ein zweiter Flügel (52) Bestandteile eines zweiten Püriersegments (72) sind, wobei das erste Püriersegment (71) und das zweite Püriersegment (72) bis zu einem maximalen Segmentwinkel gegeneinander verschwenkbar sind oder in einem festen Segmentwinkel zueinander stehen.

6. Püriereinheit (1) nach Anspruch 5, wobei der maximale Segmentwinkel respektive der feste Segmentwinkel 90° beträgt.

7. Püriereinheit (1) nach einem der Ansprüche 1 bis 6, wobei ein erster Flügel (41) und ein zweiter Flügel (42) gleiche oder unterschiedliche Lochungen (411, 421) aufweisen.

8. Püriereinheit (1) nach einem der Ansprüche 1 bis 7, wobei ein Flügel (41, 42) eine Abstreifeinrichtung (131, 132) aufweist.

9. Püriereinheit (1) nach einem der Ansprüche 1 bis 8, wobei ein erster Flügel (41) eine erste Abstreifeinrichtung (131) und ein zweiter Flügel (42) ein zweite Abstreifeinrichtung (132) aufweist, wobei die erste Abstreifeinrichtung (131) und die zweite Abstreifeinrichtung (132) gleiche oder unterschiedliche Dimensionen aufweisen.

10. Püriereinheit (1) nach einem der Ansprüche 1 bis 9, wobei eine Abweisereinrichtung (12) radial zur Rotationsachse (2) angeordnet ist, welche um die Rotationsachse (2) rotierbar ist und eingerichtet ist, um Lebensmittel und Schneidgut in den Bereich der Messer und Flügel zu transportieren.

11. Püriereinheit (1) nach einem der Ansprüche 1 bis 10, wobei an einem Ende der Püriereinheit (1) eine Aufnahmeöffnung (82) vorgesehen ist für das Zusammenwirken mit einem Lagerzapfen eines Lebensmittelbehälters des Geräts zum Bearbeiten vom Lebensmitteln.

12. Püriereinheit (1) nach einem der Ansprüche 1 bis 11, wobei an einem Ende der Püriereinheit (1) ein Antriebsnocken (81) vorgesehen ist für das Zusammenwirken mit einer Antriebsvorrichtung des Geräts zum Bearbeiten von Lebensmitteln.

13. Gerät zum Bearbeiten von Lebensmitteln, umfassend einen Lebensmittelbehälter, eine Antriebseinheit und eine Püriereinheit nach einem der Ansprüche 1 bis 12.

## Claims

1. Pureeing unit (1) for an apparatus for processing foodstuffs with at least one knife (31, 32) arranged radially to a rotation axis (2) and at least one blade (41, 42) arranged radially to the rotation axis (2), wherein the at least one knife (31, 32) and the at least one blade (41, 42) are rotatable about the rotation axis (2) wherein
at least one knife (31, 32) and at least one blade (41, 42) are components parts of a pureeing segment (71, 72) and are arranged relative to one another in the axial direction of the rotation axis (2), **characterised in that**
the blade (41, 42) comprises perforations (411, 421) and the pureeing segment is set up to effect pureeing of foodstuffs when using the pureeing unit (1) in an apparatus for processing foodstuffs.

2. Pureeing unit (1) according to claim 1 wherein a knife (31, 32) and a blade (41, 42) are component parts of a pureeing segment (71, 72) and are pivotable towards each other about the rotation axis (2) up to a maximum pivoting angle or are at a fixed pivoting angle with regard to each other.

3. Pureeing unit (1) according to any one of claims 1 to 2, wherein all knives and blades are arranged on the rotation axis in a fixed manner or at least one knife (31, 32) and/or at least one blade (41, 42) are pivotable about the rotation axis (2) about a limited pivoting angle, wherein all knives and blades are at a fixed pivoting angle with regard to each other or at least one knife and at least one blade are relatively pivotable towards each other about a limited pivoting angle.

4. Pureeing unit (1) according to claim 2 or 3 wherein the maximum pivoting angle or the fixed pivoting angle is 180°.

5. Pureeing unit (1) according to any one of claims 1 to 4 wherein a first knife (41) as well as a first blade (51) are component parts of a first pureeing segment (71) and a second knife (42) as well as a second blade (52) are component parts of a second pureeing segment (72), wherein the first pureeing segment (71) and the second pureeing segment (72) are pivotable towards each other up to a maximum segment angle or are at a fixed segment angle in relation to each other.

6. Pureeing unit (1) according to claim 5 wherein the maximum segment angle and the fixed segment angle respectively is 90°.

7. Pureeing unit (1) according to any one of claims 1 to 6 wherein a first blade (41) and a second blade (42) comprise the same or perforations (411, 421).

8. Pureeing unit (1) according to any one of claims 1 to 7 wherein one blade (41, 42) comprises a wiper device (131, 132).

9. Pureeing unit (1) according to any one of claims 1 to 8 wherein a first blade (41) comprises a first wiper device (131) and a second blade (42) comprises a second wiper device (132), wherein the first wiper device (131) and second wiper device (132) have the same or different dimensions.

10. Pureeing unit (1) according to any one of claims 1 to 9 wherein a deflector device (12) is arranged radially with regard to rotation axis (2) and rotates about the rotation axis (2) and is configured to transport foodstuffs and material to be cut into the region of the knives and blades.

11. Pureeing unit (1) according to any one of claims 1 to 10 wherein on one end of the pureeing unit (1) a receiver opening (82) is provided for cooperation with a bearing pin of a foodstuffs container of the apparatus for processing foodstuffs.

12. Pureeing unit (1) according to any one of the claims 1 to 11, wherein a drive cam (81) is provided at one end of the pureeing unit (1), for cooperation with a drive device of the apparatus for processing foodstuffs.

13. An apparatus for processing foodstuffs, comprising a foodstuffs container, a drive unit and a pureeing unit according to any one of the claims 1 to 12.

## Revendications

1. Module mixeur (1), destiné à un appareil de traitement de produits alimentaires, comprenant au moins une lame (31, 32), placée en direction radiale par rapport à un axe de rotation (2) et au moins une ailette (41, 42), placée en direction radiale par rapport à l'axe de rotation (2), l'au moins une lame (31, 32) et l'au moins une ailette (41, 42) étant rotatives autour de l'axe de rotation (2), au moins une lame (31, 32) et au moins une ailette (41, 42) étant des éléments d'un segment mixeur (71, 72), étant placées mutuellement en direction axiale de l'axe de rotation (2), **caractérisé en ce que** l'ailette (41, 42) comporte des perforations (411, 421) et le segment mixeur est aménagé pour, lors de l'utilisation du module mixeur (1), provoquer une réduction en purée de produits alimentaires dans un appareil de traitement de produits alimentaires.

2. Module mixeur (1) selon la revendication 1, une lame (31, 32) et une ailette (41, 42) étant des éléments d'un segment mixeur (71, 72) et étant susceptibles de pivoter l'une vers l'autre autour de l'axe de rotation (2) jusqu'à un angle de pivotement maximal ou se trouvant dans un angle de pivotement mutuel fixe.

3. Module mixeur (1) selon l'une quelconque des revendications 1 à 2, toutes les lames et ailettes étant fixement placées sur l'axe de rotation ou au moins une lame (31, 32) et/ou au moins une ailette (41, 42) étant susceptible(s) de pivoter par rapport à un angle de pivotement limité autour de l'axe de rotation (2), toutes les lames et ailettes se trouvant dans un angle de pivotement mutuel fixe ou au moins une lame et au moins une ailette étant susceptibles de pivoter l'une vers l'autre par rapport à un angle de pivotement limité.

4. Module mixeur (1) selon la revendication 2 ou 3, l'angle de pivotement maximal étant respectivement l'angle de pivotement fixe de 180°.

5. Module mixeur (1) selon l'une quelconque des revendications 1 à 4, une première lame (41), ainsi qu'une première ailette (51) étant des éléments d'un premier segment mixeur (71) et une deuxième lame (42), ainsi qu'une deuxième ailette (52) étant des éléments d'un deuxième segment mixeur (72), le premier segment mixeur (71) et le deuxième segment mixeur (72) étant susceptibles de pivoter l'un vers l'autre autour d'un angle maximal de segment ou se trouvant dans un angle de pivotement mutuel fixe.

6. Module mixeur (1) selon la revendication 5, le premier angle de segment maximal étant respectivement l'angle de segment fixe de 90°.

7. Module mixeur (1) selon l'une quelconque des revendications 1 à 6, une première ailette (41) et une deuxième ailette (42) comportant des perforations (411, 421) identiques ou différentes.

8. Module mixeur (1) selon l'une quelconque des revendications 1 à 7, une ailette (41, 42) comportant un dispositif racleur (131, 132).

9. Module mixeur (1) selon l'une quelconque des revendications 1 à 8, une première ailette (41) comportant un premier dispositif racleur (131) et une deuxième ailette (42) comportant un deuxième dispositif racleur (132), le premier dispositif racleur (131) et le deuxième dispositif racleur (132) présentant des dimensions identiques ou différentes.

10. Module mixeur (1) selon l'une quelconque des revendications 1 à 9, un dispositif déviateur (12) étant placé en direction radiale par rapport à l'axe de rotation (2), lequel est rotatif autour de l'axe de rotation (2) et aménagé pour transporter des produits alimentaires et des produits à couper dans la zone des lames et ailettes.

11. Module mixeur (1) selon l'une quelconque des revendications 1 à 10, sur une extrémité du module mixeur (1) étant prévu un orifice de logement (82), destiné à coopérer avec un axe de support d'un récipient à produit alimentaire de l'appareil de traitement de produits alimentaires.

12. Module mixeur (1) selon l'une quelconque des revendications 1 à 11, sur une extrémité du module mixeur (1) étant prévue une came d'entraînement (81), destinée à coopérer avec un dispositif d'entraînement de l'appareil de traitement de produits alimentaires.

13. Appareil de traitement de produits alimentaires, comprenant un récipient à produits alimentaires, un module d'entraînement et un module mixeur selon l'une quelconque des revendications 1 à 12.
